# FASCICULE DE BREVET EUROPEEN

(11) **EP 1 416 748 B1**
(45) Date de publication et mention de la délivrance du brevet: **13.02.2013**
(21) Numéro de dépôt: 03103984.5
(22) Date de dépôt: 28.10.2003
(51) Int. Cl.: H04W 84/08, H04W 74/08

(54) **Procédé d'allocation d'accès dans un réseau partiellement connecté**
Verfahren zur Zugangserteilung in einem teilweise verbundenen Netz
Method for allocating access in a partially connected network

(30) Priorité: 31.10.2002 FR 0213703
(43) Date de publication de la demande: 06.05.2004
(73) Titulaire: Thales, 92200 Neuilly Sur Seine (FR)
(72) Inventeur: Paul, François, 94117 CX, Arcueil (FR)
(74) Mandataire: Dudouit, Isabelle

(56) Documents cités:
- US-A- 5 455 821
- US-A- 5 515 035
- US-A- 5 673 031
- US-A- 6 049 548
- US-A1- 2002 141 375
- US-B1- 6 229 795
- US-B1- 6 389 284
- STEER D G: "COEXISTENCE AND ACCESS ETIQUETTE IN THE UNITED STATES UNLICENSED PCS BAND A LISTEN-BEFORE-TRANSMIT PROTOCOL CONTROLS THE FLOW OF TRAFFIC" IEEE PERSONAL COMMUNICATIONS, IEEE COMMUNICATIONS SOCIETY, US, vol. 1, no. 4, 1 octobre 1994 (1994-10-01), pages 36-43, XP000478096 ISSN: 1070-9916

## Description

La présente invention concerne un procédé d'allocation d'accès de stations à un réseau partiellement connecté.

Sous l'expression « partiellement connecté » on désigne dans la présente description un réseau constitué de plusieurs stations où les liaisons ne sont pas nécessairement établies entre tous les couples de stations possibles, et où les liaisons ne sont pas nécessairement symétriques. Par exemple, lorsqu'une station émet, certaines reçoivent mais pas toutes.

Les mécanismes actuellement utilisés pour l'allocation de l'accès de stations à un support en diffusion, par exemple la voie radio, sont basés ou bien sur un ordonnancement préalable, tel que le protocole TDMA (Time Division Multiple Access) ou encore sur un ordonnancement calculé indépendamment par chaque station accédant au support, avec introduction de composantes aléatoires et de rétroactions de manière à diminuer l'effet des collisions (exemples : « slotted Aloha » et adaptation de la probabilité d'accès).

L'ordonnancement préalable (TDMA) présente l'avantage de garantir, pour chaque station, un délai minimum d'accès au réseau et une proportion d'utilisation minimum du support pour chaque station. Il présente toutefois l'inconvénient de ne pas adapter cette allocation aux besoins effectifs de chaque station, ces besoins pouvant être variables dans le temps. Il peut donc y avoir une disproportion entre les performances que le support de diffusion est capable d'offrir et celles qui sont réellement obtenues.

Les algorithmes d'ordonnancement avec adaptation calculés indépendamment sur chaque station présentent l'avantage de s'adapter à l'utilisation effective du support par les différentes stations. Toutefois, leurs spécifications font systématiquement appel à l'introduction délibérée de phénomènes aléatoires et à des mécanismes de rétroaction entre les différentes stations. Les variables d'état de l'algorithme sur une station varie en fonction du comportement des autres stations. D'autre part, ces algorithmes ne prétendent pas éliminer les collisions. Ils les prennent en compte, dans leur fonctionnement, de manière à réduire leur fréquence.

Le brevet US 6 229 795 divulgue un procédé d'allocation de ressources dans un système de communication comportant plusieurs stations dont au moins deux ne sont pas en visibilité. Le procédé effectue une définition d'un graphe de concurrence entre les différentes stations, qui contribue à une attribution initiale des ressources tenant compte de la topologie du réseau.

Le brevet US 5 455 821 divulgue un système de communication cellulaire dans lequel le réseau se doit d'être organisé en cellules centrées autour d'une station de base.

La présente invention propose notamment un procédé permettant de garantir globalement à l'ensemble des stations l'accès au support en diffusion pendant une proportion importante du temps.

L'invention concerne un procédé d'allocation de ressources dans un système de communication et en accord avec la revendication 1.

Le procédé selon l'invention permet notamment de garantir une certaine proportion d'utilisation du support de diffusion en fonction de la topologie du réseau, en évitant les collisions lors de l'accès au support de diffusion.

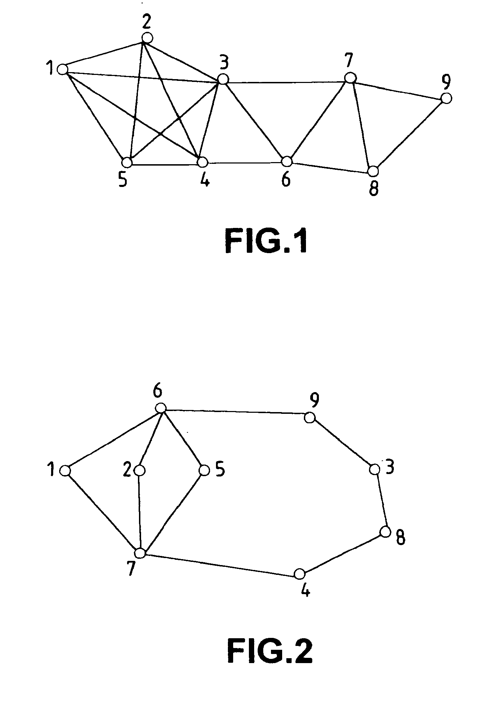

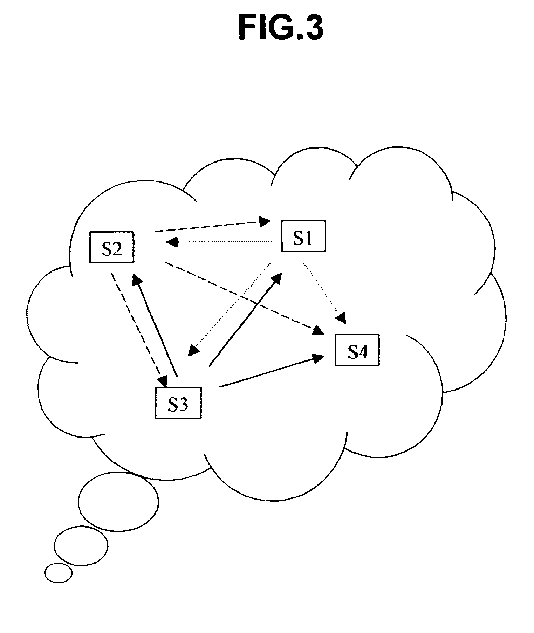

D'autres caractéristiques et avantages du procédé selon l'invention apparaîtront mieux à la lecture de la description qui suit d'un exemple donné à titre illustratif et nullement limitatif annexé des figures qui représentent :
➢ Les figures 1 et 2 un exemple chiffré de graphe de topologie permettant d'exécuter le procédé selon l'invention,
➢ La figure 3 un exemple d'architecture de réseau de plusieurs stations,
➢ La figure 4 un exemple d'algorithme d'allocation d'un support réseau pour des stations en visibilité.

Afin de mieux comprendre les étapes mises en oeuvre dans le procédé, l'exemple donné à titre illustratif et nullement limitatif concerne un réseau radio comportant plusieurs stations, telles que des émetteurs-récepteurs. Les liaisons entre ces stations ne sont pas toutes symétriques, par exemple S_{A} reçoit de S_{B} mais S_{B} ne reçoit pas de S_{A} et S_{A} reçoit de S_{C} et S_{C} reçoit de S_{A}.

Le principe mis en oeuvre est le suivant :
on suppose qu'une entité extérieure fait en sorte qu'à tout instant, chaque station Si du réseau radio connaît la topologie complète du réseau. A partir de ces informations, le procédé détermine un ordonnancement d'émission pour chaque station. Cet ordonnancement indique précisément à chaque station les intervalles de temps sur lesquels cette station a le droit d'émettre. Quand une station souhaite émettre et qu'elle se trouve dans un intervalle de temps autorisé pour elle, elle applique un mécanisme d'allocation du support en diffusion. L'algorithme du calcul de cet ordonnancement tient notamment compte du fait que certains groupes de stations sont complètement connectés et peuvent donc partager des intervalles de temps d'émission autorisée. En effet, dans le cas où plusieurs stations sont en visibilité les une des autres et qu'elles tentent simultanément d'accéder au support en diffusion, l'accès au support sera départagé grâce au mécanisme d'allocation selon l'invention.

On suppose de plus que les stations Si disposent d'une base de temps commune qui divise le temps en intervalles, numérotés à partir de 0, appelés « intervalles d'émission », en intervalles égaux par exemple. En principe une émission de données doit pouvoir être contenue entièrement dans un intervalle d'émission. La base de temps est par exemple assurée par des horloges équipant chacune des stations. On suppose que ces horloges sont synchronisées entre elles.

Le procédé d'allocation selon l'invention comporte en résumé les étapes suivantes :
- Définir une topologie du réseau sous la forme par exemple d'une relation « de visibilité » entre les stations, traduisant le fait que telle station peut recevoir de telle autre,
- Déterminer un graphe d'une autre relation dite « de concurrence » à partir de la relation de « visibilité » -on dit que 2 stations sont en relation de « concurrence » si les stations ne sont pas en relation de « visibilité » pas mais sont vues chacune par une troisième station, ou encore si la relation de visibilité entre ces deux stations n'est pas symétrique, c'est-à-dire qu'une station reçoit de l'autre, mais pas l'inverse.
- Définir pour chaque station les créneaux temporels dans lesquels elle peut émettre.

Les étapes de l'algorithme d'allocation sont notamment les suivantes :

### Etape I

Le système fournit (par exemple par le biais d'un dispositif extérieur aux stations, ou bien intégré aux stations) au mécanisme les informations de visibilité du réseau. Plus précisément, on définit la relation suivante : soient deux stations Si et Sj, on dit que Si reçoit de Sj, et on note SiRSj si et seulement si quand Sj émet, Si reçoit. Le système fournit le graphe de cette relation. Dans la suite, on appelle ce graphe le « graphe de visibilité » Gv.

### Etape II Le graphe de visibilité étant connu

### Etape II.1 Bâtir le graphe d'une nouvelle relation dite "de concurrence"

A partir de la relation de visibilité (Graphe GV) on defini une relation de concurrence entre stations, notée C.

Ainsi, deux stations Si et Sj sont en concurrence , Si CSj si et seulement si
(Si*R*Sj et (NON Sj*R*Si))
ou
(Sj*R*Si et (NON Si*R*Sj))
ou
(∃ Sk tel que Sk*R*Si ET Sk*R*Sj ET NON (Si*R*Sj et Sj*R*Si))

En d'autres termes, Si*C*Sj si et seulement si il y a une relation de visibilité asymétrique entre les deux stations ou bien si une troisième station reçoit de ces deux-là, mais il n'y a pas de relation symétrique de visibilité entre les deux stations Si et Sj.

### Etape II.2 Attribution des numéros d'intervalle de temps à chaque station

Ensuite, on attribue des numéros d'intervalles de temps à chaque station. Chaque station peut se voir attribuer plusieurs numéros d'intervalles de temps. Cette attribution se fait notamment en parcourant plusieurs fois la liste complète de stations dans l'ordre de leurs numéros d'identification.

A chaque passage, le procédé examine chaque station Si et lui ajoute éventuellement un numéro d'intervalle de temps, en appliquant les règles données ci-après. A la fin de chaque passage, le procédé relève le numéro maximal d'intervalle de temps Nmax qui a été attribué lors de ce passage et des passages précédents.
Voici les règles appliquées pour chacune des stations Si examinées lors de chaque passage :
- On considère l'ensemble E des numéros d'intervalles de temps qui est la réunion des numéros d'intervalles de temps déjà attribués à une station Si lors des passages précédents et des intervalles de temps déjà attribués aux stations Sj telles que Si*C*Sj (c'est-à-dire les stations avec qui Si est en concurrence). Lors du premier passage, E peut être vide.
- Soit n le plus petit entier naturel n'appartenant pas à l'intervalle E,
   - (A.1) Si ce n'est pas le premier passage ET si n>Nmax, alors le procédé n'ajoute aucun intervalle de temps à la station Si,
   - (A.2) Si c'est le premier passage OU si n=<Nmax, alors le procédé ajoute n aux intervalles de temps attribués à Si.

Voici les règles appliquées à la fin d'un passage, lorsque toutes les stations ont été examinées lors de ce passage :
- (B.1) Si, lors d'un passage, le procédé n'a ajouté aucun intervalle de temps à aucune station, alors le procédé n'effectue plus d'autre passage.
- (B.2) Si, lors d'un passage, le procédé a ajouté au moins un intervalle de temps, il exécute un nouveau passage.

- A l'issue du dernier passage, l'ordonnancement est défini de la façon suivante :
   - Sa périodicité correspond à Nmax+1 intervalles d'émission,
   - A l'intérieur de chaque période ainsi définie (c'est-à-dire à l'intérieur de chaque succession de Nmax + 1 intervalles d'émissions consécutifs), les intervalles d'émission sont numérotés dans l'ordre de 0 à Nmax. Chaque station a le droit d'émettre pendant les intervalles qui lui ont été attribués lors des passages décrits précédemment.
- Lorsqu'une station décide d'émettre pendant un intervalle d'émission qui lui est autorisé, elle doit le faire en respectant le mécanisme d'allocation du support décrit plus loin.

### Exemple chiffré de mise en oeuvre du procédé d'attribution des intervalles d'émission selon l'invention

Les figures 2 et 3 permettent d'illustrer un exemple de mise en oeuvre du procédé selon l'invention.

La topologie d'un réseau est illustrée à la figure 2. Elle est fournie sous la forme d'une relation existant entre les stations. Les stations qui sont en visibilité sont reliées directement par des traits sur la figure.

La figure 3 représente le graphe de concurrence déduit de cette figure qui se lit de la manière suivante :

| Station | Relations de concurrence | | | |
|---|---|---|---|---|
| 1 | S1*C*S6 | S1*C*S7 | | |
| 2 | S2*C*S6 | S2*C*S7 | | |
| 3 | S3*C*S8 | S3*C*S9 | | |
| 4 | S4*C*S7 | S4*C*S8 | | |
| 5 | S5*C*S6 | S5*C*S7 | | |
| 6 | S6*C*S1 | S6*C*S2 | S6*C*S5 | S6*C*S9 |
| 7 | S7*C*S1 | S7*C*S2 | S7*C*S4 | S7*C*S5 |
| 8 | S8*C*S3 | S8*C*S4 | | |
| 9 | S9*C*S3 | S9*C*S6 | | |

L'attribution des intervalles d'émission s'effectue de la manière suivante, le développement est donné en détaillant certaines étapes du deuxième passage à titre illustratif.

### Premier passage

Lors du premier passage l'ensemble E est vide, le plus petit entier supérieur est donc égal à 0

### Deuxième passage

- Station 1 E={0, 1} n = 2, n=<Nmax la condition (A.2) s'applique donc on attribue 2 comme numéro d'intervalle à la station,
- Station 2 en concurrence avec les stations 6 et 7, E={0, 1}, n=2 n=<Nmax la condition (A.2), d'où le numéro 2 d'attribution à la station,
- Station 3 en concurrence avec les stations 8 et 9 - E={0, 1, 2}, n=3 n>Nmax, la condition (A.1) s'applique et on n'ajoute donc aucun intervalle d'émission à la station,
- ...................................
- Station 5 - en concurrence avec 6 et 7 - E={0, 1}, n=2 n=<Nmax la condition (A.2) s'applique donc on attribue 2 comme numéro de créneau à la station,
- Station 6 - en concurrence avec 1, 2, 5 et 9 - E={0, 1, 2}, n=3 n>Nmax la condition (A.1) s'applique on n'ajoute aucun intervalle de temps à la station,
- ...................................
- jusqu'à la station 9

### Troisième passage

Au cours du deuxième passage, le procédé a ajouté au moins un intervalle de temps, la condition (B.2) s'applique. Le procédé exécute un troisième passage au cours duquel il n'ajoute aucune créneau. La condition (B.1) s'applique alors et le procédé termine son exécution - condition (B1).

Le tableau 2 d'attribution des créneaux temporels est donné ci-après

| Numéro de station | Numéro d'intervalle d'émission attribué lors du premier passage | Numéro d'intervalle d'émission ajouté lors du deuxième passage |
|---|---|---|
| 1 | 0 | 2 |
| 2 | 0 | 2 |
| 3 | 0 | Pas d'attribution |
| 4 | 0 | 2 |
| 5 | 0 | 2 |
| 6 | 1 | Pas d'attribution |
| 7 | 1 | Pas d'attribution |
| 8 | 1 | Pas d'attribution |
| 9 | 2 | Pas d'attribution |

Les intervalles de temps attribués aux stations sont les suivants :
- Les stations 1, 2, 4 et 5 ont le droit d'émettre sur les intervalles 0 et 2,
- La station 3 a le droit d'émettre sur l'intervalle 0,
- Les stations 6, 7 et 8 ont le droit d'émettre sur l'intervalle 1,
- La station 9 a le droit d'émettre sur l'intervalle 2.
Nmax = 2, la périodicité de l'ordonnancement est définie et donc égale à 3 C'est-à-dire que les intervalles d'émission sont regroupés par séquences de 3 intervalles consécutifs, et qu'à l'intérieur de chacune de ces séquences, les intervalles d'émission autorisés pour chaque station sont ceux indiqués dans le tableau ci-dessus.

Selon une variante de réalisation le procédé peut comporter plusieurs étapes complémentaires permettant notamment l'allocation de l'accès au support de diffusion, de telle sorte que lorsque plusieurs stations en relation de visibilité ont le droit d'émettre pendant le même intervalle d'émission, une seule d'entre elle s'alloue effectivement le support, évitant ainsi toute collision. La figure 1 schématise un exemple de réseau composé de stations en visibilité les unes des autres.

En résumé, le principe de fonctionnement est le suivant : lorsque plusieurs stations souhaitent accéder au réseau radio, elles entament une séquence d'allocation. Lors de cette séquence, toutes les stations *Si* annoncent simultanément leurs identifications, en suivant un protocole précis, objet de l'invention. A la fin de cette séquence d'allocation, la station Se ayant annoncé le plus grand nombre, est réputée s'être alloué le réseau radio, c'est-à-dire qu'elle l'utilise. Les autres stations *Si* savent qu'elles ne sont pas élues. Une fois que la station élue *Se* a fini d'utiliser le réseau radio, les autres stations réitèrent les étapes du procédé si elles souhaitent s'allouer le réseau radio, c'est-à-dire devenir la station élue. Afin de ne favoriser aucune station, les identifications sont permutées de façon systématique.

La figure 3 représente une structure de réseau radio comportant plusieurs stations Si. Le réseau radio est en diffusion, ce qui se traduit par le fait que lorsqu'une station Si émet un signal contenant une information ou un message, toutes les autres stations savent qu'un message ou une information a été émis.

Les stations Si sont adaptées afin que :
➢ Si plusieurs stations émettent simultanément, toutes les autres stations sont capables de déterminer le fait qu'une au moins des stations a émis une information, même si le contenu des informations ne peut être extrait (par exemple en cas de brouillage des informations émises). Pour cela les stations possèdent par exemple un calculateur programmé en conséquence.
➢ Les stations Si ont une base de temps commune qui divise le temps en intervalles élémentaires, par exemple en intervalles égaux, appelés par la suite « créneaux d'identification » référencés k. Ces créneaux d'identification sont numérotés à partir de 0 avec une référence connue de toutes les stations. Une remise à 0 périodique de cette référence est possible. La durée de cette périodicité est fixée, par exemple, pour conserver un caractère équitable à l'algorithme mis en oeuvre dans le procédé selon l'invention. La base de temps est par exemple assurée par des horloges équipant chacune des stations. Ces horloges sont synchronisées entre elles.

Le procédé définit notamment deux types d'opérations élémentaires :
- opération « recevoir », c'est-à-dire pour une station Si détecter si une autre station *Si* émet quelque chose, un message, pendant le créneau k. Si, lorsqu'elle se trouve dans un état de réception, la station S*i* détecte un signal émis par une station S*i*, on dit qu'elle reçoit le symbole « 1 », sinon on dit qu'elle reçoit le symbole « 0 ».
- opération « émettre 1 », la station Si émet un signal quelconque pendant le créneau k. Le contenu du signal émis n'est pas pris en compte pour définir cette opération.

Le procédé selon l'invention comporte au moins les étapes suivantes :

### a) Attribution d'une identification initiale à chaque station Si.

Ceci correspond à attribuer à une station, un numéro d'identification I₀ codé sur un nombre de bits n donné et dont la valeur est prise dans un intervalle prédéfini d'entiers [0, N-1], tel que N=2*ⁿ*. Les identifications initiales des stations Si du réseau sont différentes.

Cette attribution est par exemple effectuée par un système de gestion et de configuration extérieur aux stations, connu de l'Homme du métier.

A chaque nouvel intervalle de temps correspondant à un créneau d'identification k, l'identification courante 1 de la station Si est calculée par la station, en fonction de la valeur initiale I₀ et de la valeur courante de k. Un exemple de méthode de calcul de I en fonction de I₀ et de k est fourni plus loin. Ce calcul est réalisé par exemple à l'aide d'un circuit de traitement numérique, tel qu'un processeur ou un ASIC, intégré à la station.

### b) Tentative d'émission

Une station Si qui souhaite s'allouer le réseau radio (c'est-à-dire l'utiliser) entame une séquence d'annonce de son identification. A ce moment son numéro d'identification a une valeur donnée I, dont la représentation binaire s'écrit b₁b₂...bₙ₋₁bₙ. La séquence d'annonce comporte notamment les étapes suivantes :
➢ b.1) pour i variant de 1 à n, i étant l'indice de b,
➢ b.1.1) si bi vaut « 0 », la station Si est dans un état de réception pendant le créneau k+i-1,
   ➢ si la station reçoit le symbole « 1 », elle n'est pas élue. Elle abandonne sa séquence d'allocation (tentative d'émission) puisque le réseau radio va être alloué à une autre station référencée Se. La station Si n'émet plus dans les créneaux suivants jusqu'à ce que la station élue Se ait terminé d'utiliser le réseau radio.
   ➢ si la station reçoit le symbole « 0 », (état de réception) elle continue la boucle b.1).
➢ b.1.2) Si bi vaut « 1 », la station Si est dans un état d'émission, elle émet le symbole « 1 » pendant le créneau k+i-1.
   b.2) si la station a effectué les étapes de la boucle b.1) sans recevoir le symbole « 1 », alors elle est décrétée comme étant la station élue, Se.

### c) A la fin de la séquence d'allocation, le réseau radio est alloué à une station Se, les autres stations Sj attendent la fin de l'utilisation du réseau radio par cette station élue Se. Pour cela, les stations du réseau sont équipées par exemple d'un calculateur utilisant un algorithme de détection connu par exemple de l'Homme du métier.

Selon une variante de réalisation, une étape supplémentaire b0) est rajoutée avant l'étape b1). Cette étape b0) consiste à émettre pendant le créneau k. Les étapes b1) ; b.1.1) et b.1.2) s'effectuent lors des créneaux k+1 à k+n, au lieu des créneaux k à k+n-1.

Tant qu'une station est en état de réception, elle peut détecter le démarrage d'une séquence d'allocation initiée par une ou plusieurs autres stations car un tel démarrage se traduit par l'émission d'un symbole « 1 ». Plusieurs stations peuvent démarrer simultanément une séquence d'allocation, la boucle b2) sert à les départager en ce qui concerne l'accès au support.

### Exemple de méthode d'attribution de l'identification courante I en fonction de l'identification initiale I₀ et de la valeur courante de k

Cette attribution s'effectue par exemple de la manière décrite ci-après. Pour toute valeur de N, on donne à l'algorithme (il s'agit ici de l'algorithme de calcul de I en fonction de I₀ *k*) une donnée de configuration sous la forme par exemple d'une permutation σ de l'intervalle [0, n-1]. Cette permutation a un seul cycle de longueur N.

Comme il a été mentionné précédemment, une station se voit attribuer une identification initiale I₀ dans un intervalle [0, N-1]. Lors de la séquence d'allocation qui démarre au créneau k, l'identification utilisée est σ ^{k}(I₀).

La valeur de σ est choisie de sorte que ses itérations successives, appliquées à un sous-ensemble initial quelconque de l'intervalle [0, N-1] ne favorise aucun des éléments initiaux.

Un exemple de permutation sur l'intervalle [0, 31] est donnée dans le tableau 1 ci-dessous à titre illustratif :

| | | | | | | | | | | | | | | | | |
|---|---|---|---|---|---|---|---|---|---|---|---|---|---|---|---|---|
| I | 0 | 1 | 2 | 3 | 4 | 5 | 6 | 7 | 8 | 9 | 10 | 11 | 12 | 13 | 14 | 15 |
| σ (i) | 14 | 27 | 4 | 19 | 28 | 30 | 16 | 5 | 17 | 24 | 2 | 25 | 18 | 23 | 31 | 21 |
| I | 16 | 17 | 18 | 19 | 20 | 21 | 22 | 23 | 24 | 25 | 26 | 27 | 28 | 29 | 30 | 31 |
| σ (i) | 8 | 3 | 0 | 26 | 11 | 10 | 6 | 12 | 29 | 13 | 9 | 22 | 20 | 15 | 1 | 7 |

### Exemple de mise en oeuvre du procédé

L'exemple qui suit est donné pour un réseau radio avec 4 stations présentes.
Supposons que :
➢ *N* = 32
➢ 4 stations A, B, C et D sont en présence dans le réseau radio, leurs identifications initiales sont respectivement 11, 12, 13 et 22.
➢ La permutation σ choisie dans l'implémentation est celle donnée dans le tableau 1 en exemple ci-dessus.

On considère uniquement les cas où les stations démarrent simultanément des séquences d'allocation. Pour chaque station, on indique par le symbole « ↑1 » l'opération « émettre 1 » et par les symboles « ↓0 » et « ↓1 » les opérations « recevoir 0 » et « recevoir 1 ».

Supposons qu'une séquence d'allocation démarre avec le créneau d'identification k = 3827. k modulo 32 = 19, donc l'itération de la permutation est σ³⁸²⁷ = σ¹⁹. Les valeurs d'identification des stations A, B, C et D sont donc respectivement σ¹⁹(11) = 3, σ¹⁹(12) = 24, σ¹⁹(13) = 26 et σ¹⁹(22) = 25. Les représentations binaires correspondantes sont A: 00011, B: 11000, C:11010et D:11001.

Le tableau 2 ci-dessous décompose bit par bit la représentation binaire des identifications des stations :

| | b1 | b2 | b3 | b4 | b5 |
|---|---|---|---|---|---|
| A | 0 | 0 | 0 | 1 | 1 |
| B | 1 | 1 | 0 | 0 | 0 |
| C | 1 | 1 | 0 | 1 | 0 |
| D | 1 | 1 | 0 | 0 | 1 |

Le comportement des stations sera alors :

| Créneau | *K* | *k + 1* | *k + 2* | *k + 3* | *k + 4* | *k + 5* |
|---|---|---|---|---|---|---|
| A: | ↑1 | ↓1 abandon | ↓1 | ↓0 | ↓1 | ↓0 |
| B: | ↑1 | ↑1 | ↑1 | ↓0 | ↓1 abandon | ↓0 |
| C: | ↑1 | ↑1 | ↑1 | ↓0 | ↑1 | ↓0 |
| D: | ↑1 | ↑1 | ↑1 | ↓0 | ↓1 abandon | ↓0 |

La station C est élue car elle ne reçoit jamais le symbole d'émission « 1 ».

Les étapes du procédé d'allocation de l'accès décrit précédemment sont utilisées par exemple dans le cas d'un réseau radio comportant plusieurs postes émetteurs-récepteurs pourvus de circuit de traitement numérique, tel qu'un ASIC programmé pour exécuter les étapes précédemment décrites ou encore un processeur programmé.

La détection de « l'activité» d'un poste est par exemple effectuée par détection de niveaux. Par exemple, l'opération « émettre 1 » correspond à l'émission d'un bruit. Ainsi, le brouillage entre les stations n'aura pas pour résultat la diminution du niveau reçu.

Le procédé selon l'invention s'applique aussi pour un réseau local pourvus d'équipements informatiques tels que des micro-ordinateurs.

## Revendications

1. Procédé d'allocation de ressources dans un système de communication comprenant un support en diffusion et comportant plusieurs stations Si, Sj dont au moins deux ne sont pas en visibilité, le procédé détermine un ordonnancement d'émission pour chaque station, ledit ordonnancement indiquant à chaque station les intervalles de temps sur lesquels cette station a le droit d'émettre, **caractérisé en ce qu'**il comporte au moins les étapes suivantes :
• définir un graphe de concurrence entre les différentes stations Si,
• attribuer des intervalles de temps à chaque station en effectuant des passages successifs sur l'ensemble des stations en effectuant à chaque passage, et pour chaque station, les étapes suivantes :
• soit E un intervalle de numéros d'intervalle de temps donné, correspondant à la réunion des numéros d'intervalles de temps déjà attribuée à une station Si lors des passages précédents et des intervalles de temps déjà attribués aux stations Sj qui sont en relation avec Si par une relation de concurrence.
• soit n le plus petit entier naturel n'appartenant pas à l'intervalle E,
• (A.1) Si ce n'est pas le premier passage ET n>Nmax, alors n'ajouter aucun intervalle de temps à la station Si, où Nmax, représente le numéro maximal d'intervalle de temps attribue lors de ce passage et des passages précédents
• (A.2) Si c'est le premier passage OU si n=<Nmax, alors ajouter n aux intervalles de temps attribués à Si.
• (B) continuation de la boucle des passages sur l'ensemble des stations :
• (B.1) Si, lors d'un passage, aucun intervalle de temps n'a été ajouté, alors ne plus effectuer plus d'autre passage.
• (B.2) Si, lors d'un passage, au moins un intervalle de temps, a été ajouté, alors exécuter un nouveau passage.

2. Procédé selon l'une des revendications 1 **caractérisé en ce que** le graphe de la relation de « concurrence » est établi selon les étapes suivantes : à partir d'une relation de « visibilité », notée R, on définit une relation de concurrence entres stations, notée C déterminée de la manière suivante :
deux stations Si et Sj sont en concurrence , SiCSj si et seulement si (Si*R*Sj et (NON Sj*R*Si))
ou
(Sj*R*Si et (NON Si*R*Sj)
ou
(∃ Sk/ Sk*R*Si ET Sk*R*Sj ET NON (Si*R*Sj et Sj*R*Si))

3. Procédé selon l'une des revendications 1 ou 2 **caractérisé en ce qu'**il comporte au moins les étapes suivantes :
a) Coder l'identificateur I des stations en visibilité , sur un nombre n de bits b1, b2, ... b*n*, en utilisant 2 symboles correspondant à un état « d'écoute » et à un état « d'émission »,
b) Pour une station quelconque S*i*, lors d'une tentative d'émission commençant à un créneau d'identification donné, k,
b.1) pour i variant de 1 à n
b.1.1) si la valeur de bi est égale au symbole correspondant à l'état « d'écoute », la station Si reçoit pendant le créneau k+i-1 :
➢ si elle détecte un signal émis par une autre station elle considère qu'elle n'est pas élue ;
➢ si elle ne détecte rien elle continue le parcours des bits b*i* ;
b.1.2) si la valeur de bi est égale au symbole correspondant à l'état « d'émission » la station émet pendant le créneau k+i -1;
c) Allouer le support à la station qui a effectué l'étape b.2) sans recevoir le symbole d'émission.

4. Procédé selon la revendication 3 **caractérisé en ce qu'**il comporte une 3 étape b.0) préalable à l'étape b.1) d'émission du symbole « d'émission » par la station Si et **en ce que** les étapes b.1), b.1.1), b.1.2) sont effectuées sur les créneaux d'identification variant de k +1 à k+n.

5. Procédé selon l'une des revendications 3 et 4 **caractérisé en ce que** l'on utilise le codage en base binaire et l'opération « recevoir », « reçoit 1 » lorsqu'une station détecte un signal provenant d'une autre station et « reçoit 0 » lorsqu'elle ne reçoit pas de signal et l'opération « émettre 1 » lorsque la station émet un signal dans un créneau donné.

6. Procédé selon l'une des revendications 3 à 5 **caractérisé en ce que** l'on utilise un numéro d'identificateur pris dans un intervalle [0, N-1] avec N=2ⁿ.

7. Procédé selon l'une des revendications précédentes **caractérisé en ce que** le support en diffusion est un réseau radio et **en ce que** les stations sont des postes émetteurs-récepteurs.

8. Système d'allocation de l'accès d'un support en diffusion à plusieurs stations Si **caractérisé en ce que** les stations sont pourvus d'un circuit de traitement numérique adapté à exécuter les étapes du procédé selon l'une des revendications 1 à 5.

9. Système selon la revendication 8 **caractérisé en ce qu'**il comporte un dispositif de configuration des stations disjoint des stations.

## Claims

1. A method for allocating resources in a communication system comprising a broadcast medium and comprising a plurality of stations Sj, at least two of which cannot be seen, said method determines an emission schedule for each station, said schedule notifying each station of the time intervals at which said station is allowed to emit, **characterised in that** it comprises at least the following steps:
• defining a competition graph between the different stations Si;
• assigning time intervals to each station by carrying out successive runs on all of the stations by carrying out the following steps at each run and for each station:
• let E be an interval of given time interval numbers corresponding to the merging of the numbers of time intervals already assigned to a station Si during the preceding runs and of time intervals already assigned to the stations Sj that are related to Si by a relationship of competition;
• let n be the smallest natural integer that does not belong to the interval E;
• (A. 1) if it is not the first run AND n>Nmax, then no time interval is added to the station Si, where Nmax represents the maximum time interval number assigned during this run and the preceding runs;
• (A.2) if it is the first run OR if n=<Nmax, then n is added to the time intervals assigned to Si;
• (B) continuing the loop of mns on all of the stations:
• (B.1) if, during a run, no time interval has been added, then another run is no longer carried out;
• (B.2) if, during a run, at least one time interval has been added, then executing a new run.

2. The method according to claim 1, **characterised in that** the graph of the relationship of "competition" is established by means of the following steps: from a "visibility" relationship, designated R, a relationship of competition is defined between stations, designated C, and determined as follows:
two stations Si and Sj are competing, SiCSj only if (SiRSj and (NOT SjRSi))
or
(SjRSi and (NOT SiRSJ))
or
(∃, Sk/SkRSi AND SkRSj AND NOT (SiRSj and SjRSi)).

3. The method according to claim 1 or 2, **characterised in that** it comprises at least the following steps:
a) coding the identifier 1 of the stations that can be seen, on a number n of bits b1, b2,...b*n*, by using 2 symbols that correspond to a "listening" state and an "emitting" state,
b) for any station Si, during an emission attempt beginning at a given identification slot, k,
b.i) for i varying from 1 to n,
b.1.1) if the value of bi is equal to the symbol that corresponds to the "listening" state, the station Si receives during slot k+i-1:
➢ if it detects a signal emitted by another station it considers that it is not elected;
➢ if it does not detect anything then it continues the path of the bits bi;
b.1.2) if the value of bi is equal to the symbol that corresponds to the "emitting" state the station emits during slot k+i-1;
c) assigning the support to the station that completed step b.2) without receiving the emitting symbol.

4. The method according to claim 3, **characterised in that** it comprises a step b.0) prior to step b.1) of emitting the "emission" symbol by the station Si and **in that** steps b.1, b.1.), b.1.2) are carried out on the identification slots that vary from k+1 to k+n.

5. The method according to claims 3 and 4, **characterised in that** the binary based coding and the "receiving" operation, "deceive 1", is used when a station detects a signal that originates from another station and "receive 0" when it does not receive a signal and the "emission 1" a operation when the station emits a signal in a given slot.

6. The method according to any one of claims 3 to 5, **characterised in that** an identifier number is used that is taken in an interval [0, N-1] with N=2ⁿ.

7. The method according to any one of the preceding claims, **characterised in that** the broadcast bearer is a radio network and **in that** the stations are emitter-receiver stations.

8. A system for assigning access in a broadcast bearer to a plurality of stations Si, **characterised in that** the stations are provided with a digital processing circuit that is designed to execute the steps of the method according to any one of claims 1 to 5.

9. The system according to claim 8, **characterised in that** it comprises a device for configuring stations that is separated from the stations.

## Patentansprüche

1. Verfahren zum Zuweisen von Ressourcen in eine Kommunikationssystem, das ein Verteilungsmedium und mehrere Stationen Si, Sj fasst, von denen wenigstens zwei nicht sichtbar sind, wobei das Verfahren einen Sendeplan für jede Station bestimmt, wobei der Plan jeder Station die Zeitintervalle mitteilt, in denen diese Station senden darf, **dadurch gekennzeichnet, dass** es wenigstens die folgenden Schritte beinhaltet:
• Definieren einer Konkurrerukurve zwischen den verschiedenen Stationen Si;
• Zuordnen von Zeitintervallen zu jeder Station durch Durchführen aufeinanderfolgender Durchgänge an allen Stationen durch Ausführen der folgenden Schritte bei jedem Durchgang und für jede Station:
• sei E ein Intervall von gegebenen Zeitintervallnummern, die der Vereinigung von Nummer der Zeitintervalle, die einer Station Si bereits bei vorherigen Durchgängen zugeordnet wurde, und der Zeitintervalle entsprechen, die den Stationen Sj bereits zugewiesen wurden, die sich durch eine Konkurrenzbeziehung auf Si beziehen;
• sei n die kleinste natürliche ganze Zahl, die nicht zum Intervall E gehört;
• (A.1) wenn es sich nicht um den ersten Durchgang handelt UND n>Nmax, dann wird kein Zeitintervall zur Station Si hinzugefügt, wobei Nmax die maximale Zeitintervallnummer repräsentiert, die bei diesem Durchgang und bei vorherigen Durchgängen zugeordnet wurde;
• (A.2) wenn es sich um den ersten Durchgang handelt ODER wenn n=<Nmax ist, dann wird n zu den Si zugeordneten Zeitintervallen hinzugefügt;
• (B) Fortsetzen der Schleife von Durchgängen an allen Stationen:
• (B.1) wenn bei einem Durchgang kein Zeitintervall hinzugefügt wurde, dann erfolgt kein anderer Durchgang mehr;
• (B.2) wenn bei einem Durchgang wenigstens ein ein Zeitintervall wurde, dann erfolgt ein neuer Durchgang.

2. Verfahren nach Anspruch 1, **dadurch gekennzeichnet, dass** die Kurve der "Konkurrenz"-Beziehung mit den folgenden Schritten festgelegt wird: von einer "Sichtbarkeit"-Beziehung, mit *R* bezeichnet, wird eine Konkurrenzbezichung zwischen Stationen definiert, mit C bezeichnet, die wie folgt bestimmt wird:
zwei Stationen und Sj sind Konkurrenz, SiCSj, nur dann, wenn (SiRSj und (NICHT SjRSi))
oder
(SjRSi und (NICHT SiRSJ))
oder
(∃ Sk/SkRSi UND SkRSj UND NICHT (SiRSj und SjRSi)).

3. Verfahren nach Anspruch 1 oder 2, **dadurch gekennzeichnet, dass** es wenigstens die folgenden Schritte beinhaltet:
a) Codieren der Kennung 1 der sichtbaren Stationen an einer Anzahl n von Bits b1, b2,...b*n* unter Verwendung von 2 Symbolen, die einem "Horch"-Zustand und einem "Sende"-Zustand entsprechen,
b) für jede Station Si bei einem Sendeversuch beginnend mit einem gegebenen Identifikationsschlitz k:
b.1) für i im Bereich von 1 bis n,
b.1.1) wenn der Wert von bi gleich dem Symbol ist, das dem "Horch"-Zustand entspricht, dann empfängt die Station im Schlitz k+i-1:
➢ wenn sie ein von einer anderen Station gesendetes Signal erfasst, dann stellt sie fest, dass sie nicht gewählt ist,
➢ wenn sie nichts erfasst, dann wird der Pfad der Bits b*i* fortgesetzt;
b.1.2) wenn der Wert von bi gleich dem Symbol ist, das dem "Sende"-Zustand entspricht, dann sendet die Station während des Schlitzes k+i-1;
c) Zuweisen der Unterstützung zu der Station, die Schritt b.2) vollendet hat, ohne das Sendesymbol zu empfangen.

4. Verfahren nach Anspruch 3, **dadurch gekennzeichnet, dass** es einen Schritt b.0) vor Schritt b.1) des Sendens des "Sende"-Symbols durch die Station Si beinhaltet, und dadurch, dass die Schritte b.1 b.1.1), b.1.2) an den Identifikationsschlitzen durchgeführt werden, die von k+1 bis k+n variieren.

5. Verfahren nach den Ansprüchen 3 und 4, **dadurch gekennzeichnet, dass** die binäre Codierung und der "Empfangs"-Vorgang, "Empfangen 1", angewendet werden, wenn eine Station ein Signal erkennt, das von einer anderen Station stammt, und "Empfangen 0", wenn sie kein Signal empfängt, und den "Senden 1" Vorgang, wenn die Station ein Signal in einem gegebenen Schlitz sendet.

6. Verfahren nach einem der Ansprüche 3 bis 5, **dadurch gekennzeichnet, dass** eine Kennnummer verwendet wird, die in einem Intervall [0, N-1] genommen wird, mit =2ⁿ.

7. Verfahren nach einem der vorherigen Ansprüche, **dadurch gekennzeichnet, dass** das Verteilungsmedium ein Funknetz ist, und dadurch, dass die Stationen Sender-Empfänger-Stationen sind.

8. System zum Zuweisen des Zugangs eines Verteilungsmediums an mehrere Stationen Si, **dadurch gekennzeichnet, dass** die Stationen mit einer Digitalverarbeitungsschaltung ausgestattet sind, die so ausgelegt ist, dass sie die Schritte des Verfahrens nach einem der Ansprüche 1 bis 5 ausführt.

9. system nach Anspruch 8, **dadurch gekennzeichnet, dass** es ein Gerät zum Konfigurieren von Stationen umfasst, das von den Stationen getrennt ist.
